# EUROPÄISCHE PATENTSCHRIFT

(11) **EP 3 992 256 B1**
(45) Veröffentlichungstag und Bekanntmachung des Hinweises auf die Patenterteilung: **01.05.2024**
(21) Anmeldenummer: 20205491.2
(22) Anmeldetag: 03.11.2020
(51) Int. Cl.: C09D 5/00, C09D 17/00, C09D 7/00

(54) **KIT-OF-PARTS ABTÖNSYSTEM, ABGETÖNTE ANSTRICH- UND PUTZSYSTEME ERHÄLTLICH AUS DEM KIT-OF-PARTS ABTÖNSYSTEM, ANSTRICHE UND PUTZE ERHÄLTLICH DURCH AUFTRAGEN DER ABGETÖNTEN ANSTRICH- BZW. PUTZSYSTEME, VERWENDUNG DES KIT-OF-PARTS UND VERFAHREN ZUM ABTÖNEN EINER WÄSSRIGEN FARBTONZUSAMMENSETZUNG**
KIT OF PARTS TINTING SYSTEM, TINTED PAINT AND PLASTER SYSTEMS OBTAINABLE FROM THE KIT OF PARTS TINTING SYSTEM, PAINTS AND PLASTERS OBTAINABLE BY APPLYING THE TINTED PAINTS OR PLASTER SYSTEMS, USE OF THE KIT OF PARTS AND METHOD FOR TINTING AN AQUEOUS COLOURED TONER COMPOSITION
ENSEMBLE DE PIÈCES POUR SYSTÈME DE NUANÇAGE, SYSTÈMES DE PEINTURE ET DE PLÂTRE NUANCÉS POUVANT ÊTRE OBTENUS À PARTIR DUDIT SYSTÈME, PEINTURES ET PLÂTRES POUVANT ÊTRE OBTENUS PAR APPLICATION DES SYSTÈMES DE PEINTURE OU DE PLÂTRE NUANCÉS, UTILISATION DE L'ENSEMBLE DE PIÈCES ET PROCÉDÉ DE NUANÇAGE D'UNE COMPOSITION DE COULEUR AQUEUSE

(43) Veröffentlichungstag der Anmeldung: 04.05.2022
(73) Patentinhaber: DAW SE, 64372 Ober-Ramstadt (DE)
(72) Erfinder: DELP, Ingo, 64401 Groß-Bieberau (DE); PTATSCHEK, Volker, 63773 Goldbach (DE)
(74) Vertreter: Metten, Karl-Heinz

(56) Entgegenhaltungen:
- WO-A1-2010/091416
- WO-A1-2010/091418
- WO-A1-2012/169506

## Beschreibung

Die vorliegende Erfindung betrifft ein Kit-of-parts Abtönsystem, abgetönte Anstrich- und Putzsysteme, erhältlich aus dem erfindungsgemäßen Kit-of-parts Abtönsystem, sowie Anstriche und Putze erhältlich durch Auftragen der erfindungsgemäßen abgetönten Anstrich- bzw. Putzsysteme. Des Weiteren betrifft die Erfindung ein Verfahren zum Abtönen einer wässrigen Farbtonzusammensetzung sowie die Verwendung der erfindungsgemäßen Kit-of-parts Abtönsysteme für die Herstellung abgetönter Anstrich- oder Putzsysteme.

Kit-of-parts Abtönsysteme sind dem Fachmann seit Langem bekannt. Diese Abtönsysteme umfassen regelmäßig eine Palette an sogenannten Abtönpasten, welche mit einer weißen, transparenten oder bunten Abtönbasis vermengt werden, um abgetönte Anstrichfarben sowie gefärbte Putze in vielfältigsten Farbschattierungen zu erhalten. Hierbei stellen die Abtönbasen im Allgemeinen den mengenmäßig größten Anteil der genannten Mischungen dar. Für die Farbeinstellung von Anstrichfarben bedient man sich heute regelmäßig softwaregesteuerter Abtönmaschinen. In diesen liegt eine Vielzahl an Abtönpasten unterschiedlicher Farbe vor. Diese Farbenvielfalt wird durch den Einsatz organischer und anorganischer Pigmente sichergestellt. Es hat sich gezeigt, dass abgetönte Farben und Putze, die man unmittelbar am Point-of-Sale mit Hilfe der genannten Abtönmaschinen herstellt, nicht selten zu Anstrichen oder Putzbeschichtungen führen, die, nachdem sie einige Zeit dem Sonnenlicht ausgesetzt waren, ihren Farbton verändern. D.h. die abgetönten Systeme führen zu farbigen Beschichtungen mit einer nicht zufriedenstellenden Farbtonstabilität. Diese Probleme treten in der Regel nicht auf mit Farbmassen, die in größeren Mengen am Werk gefertigt werden. Bei diesen Farbmassen sind üblicherweise sämtliche Komponenten fein aufeinander abgestimmt, einschließlich der verwendeten Pigmente bzw. Farbmittel. Diese optimierte Feinabstimmung ist regelmäßig nicht zu leisten bei Abtönsystemen, wie sie in gewerblichen Abtönmaschinen zum Einsatz kommen. Diese enthalten nicht selten über 20 oder sogar über 30 verschiedene Farbtonpasten, welche sämtlich mit einer einzigen Basiszusammensetzung zu vermengen sind. Die hieraus resultierenden Mängel bei der Farbtonstabilität, die sich zumindest bei einigen der abgetönten Farben einstellen können, führen zuweilen zu Beanstandungen. Dieses Problem stellt sich insbesondere auch dann ein, wenn man zu dunkelfarbigen Beschichtungssystemen gelangen möchte, und zwar vor allem bei Einsatz farbtonschwacher Pigmente.

Die WO 2010/091418 A1 betrifft ein Point-of-Sale-Farbsystem zum Abtönen von Basisfarben und Beizen, umfassend eine in einem Behälter mit einem Volumen von etwa 0,2 bis 20 1 vorliegende helle, nicht Infrarotlicht absorbierende Basisfarbe oder Beize und eine Vielzahl an Farbstoffen, umfassend einen Infrarotlicht absorbierenden schwarzen flüssigen Farbstoff, einen nicht Infrarotlicht absorbierenden schwarzen flüssigen Farbstoff und einen oder mehrere zusätzliche flüssige Farbstoffe aus nicht Infrarotlicht absorbierenden Pigmenten. Die Farbstoffe haben in dem Behälter mit einem Volumen von etwa 0,5 bis etwa 5 l verpackt vorzuliegen und über einen Farbstoffspender der Basisfarbe oder Beize zuführbar zu sein. Auf diese Weise sollen sowohl individuell getönte Innen- wie auch nicht Infrarotlicht absorbierende Außenfarben in Verkaufsstellen bereitgestellt werden können, und zwar ohne die Notwendigkeit eines speziellen Abgabesystems und eines Farbmittelsatzes für die Einfärbung von Außenfarben.

Aus der WO 2010/091416 A1 geht ein kundenspezifisches Farbabtönungssystem für Farben oder Beizen hervor, das eine dunkelfarbige, nicht Infrarotlicht absorbierende flüssige Grundfarbe oder Beize und eine Reihe von konzentrierten flüssigen Färbemitteln am Verkaufsort umfasst, die im Wesentlichen frei von Infrarotlicht absorbierenden Pigmenten sind und die, wenn sie in die dunkelfarbige Grundfarbe oder Beize gegeben werden, kundenspezifisch abgetönte, nicht Infrarotlicht absorbierende Farben oder Beizen in einer Vielzahl an aufgehellten Farbtönen ergeben. Die resultierenden Farben und Beizen zeichnen sollen sich, selbst wenn sie in dunklen, individuell getönten Farben hergestellt werden, durch eine geringe Wärmeentwicklung auszeichnen, wenn man sie Sonnenlicht aussetzt.

In der WO 2012/169506 A1 wird ein schwarzer Pigmentfarbstoff auf Azobasis beschrieben, der eine hohe elektrische Isolierung aufweisen und Abschirmungseigenschaften für sichtbares Licht sowie Infrarotdurchlässigkeit bereitstellen soll. Das Pigment soll dabei über eine oder mehrere Azogruppen im Molekül verfügen und mindestens einen 2-Hydroxy-nH-benzo[a]-carbazol-3-carbonsäureamidrest aufweisen. Der spezifische Volumenwiderstand des Pigments soll mindestens 10¹⁰ Ω · cm betragen und über eine durchschnittliche Teilchengröße von 10 nm bis 200 nm verfügen. Dieser schwarze Pigmentfarbstoff auf Azobasis soll zuverlässig für die Bildung einer isolierenden Farbanzeigetafel mit einer schwarzen Matrix (BM), die auf einem Farbfilter (CF)-Substrat basiert, und für die Färbung der Rückwand von photovoltaischen Energieerzeugungspanels verwendet werden können.

Der vorliegenden Erfindung lag daher die Aufgabe zugrunde, auf Kit-of-parts Abtönsysteme zurückgreifen zu können, die nicht mit den Nachteilen des Stands der Technik behaftet sind und die insbesondere das Risiko minimieren, zu abgetönten Farben oder Putzbeschichtungen zu gelangen, die bei Lichteinfall über die Zeit eine unbefriedigende Farbtonstabilität zeigen.

Demgemäß wurde ein Kit-of-parts-Abtönsystem für die Farbeinstellung von Beschichtungsmassen gemäß einer ersten Ausführungsvariante gefunden, umfassend
A) mindestens eine wässrige Farbtonzusammensetzung, vorzugsweise mindestens zwei wässrige Farbtonzusammensetzungen, wobei mindestens eine wässrige Farbtonzusammensetzung, vorzugsweise eine Vielzahl an wässrigen Farbtonzusammensetzungen, mindestens ein Pigment, mindestens einen HALS-Stabilisator (Hindered Amine Light Stabilizer), mindestens ein Netz- und/oder Dispergiermittel, mindestens ein Feuchthaltemittel, insbesondere Polyalkylenglykole, mindestens einen UV-Absorber und Wasser sowie gegebenenfalls mindestens ein erstes Additiv und/oder gegebenenfalls mindestens einen Füllstoff, enthalten oder hieraus bestehen, und
B) mindestens eine, insbesondere genau eine, Abtönbasiszusammensetzung, bestehend aus oder enthaltend mindestens ein Bindemittel, mindestens ein flüssiges Medium und gegebenenfalls mindestens ein zweites Additiv.

Ferner wurde ein Kit-of-parts-Abtönsystem für die Farbeinstellung von Beschichtungsmassen gemäß einer zweiten Ausführungsvariante gefunden, umfassend
A') mindestens eine wässrige Farbtonzusammensetzung, vorzugsweise mindestens zwei wässrige Farbtonzusammensetzungen, wobei mindestens eine wässrige Farbtonzusammensetzung, vorzugsweise eine Vielzahl an wässrigen Farbtonzusammensetzungen, mindestens ein Pigment, mindestens ein Netz- und/oder Dispergiermittel, mindestens ein Feuchthaltemittel, insbesondere Polyalkylenglykole, und Wasser sowie gegebenenfalls mindestens ein erstes Additiv und/oder gegebenenfalls mindestens einen Füllstoff enthalten oder hieraus bestehen,
   wobei die Farbtonzusammensetzung A') im Wesentlichen frei von HALS-Stabilisatoren und im Wesentlichen frei von UV-Absorbem ist,
B) mindestens eine, insbesondere genau eine, Abtönbasiszusammensetzung, bestehend aus oder enthaltend mindestens ein Bindemittel, mindestens ein flüssiges Medium und gegebenenfalls mindestens ein zweites Additiv, und
C) mindestens eine, insbesondere pastöse, Zusammensetzung enthaltend mindestens einen HALS-Stabilisator und mindestens einen UV-Absorber.

Die Abtönbasiszusammensetzung B) kann einen Wasserlack, eine Anstrichfarbe, insbesondere Dispersionsfarbe, besonders bevorzugt Dispersionsaußenfarbe, Silikatfarbe, Silikonharzfarbe, Dispersionssilikatfarbe, Sol-Silikat-Farbe und/oder Hybridbindemittelfarbe, insbesondere auf Basis einer wässrigen Organosilikat-Hybrid-Dispersion, oder einen Putz, insbesondere Dispersionsputz, Silikatputz, Dispersionssilikatputz, Silikonharzputz, Hybridbindemittelputz, Organosilikat-Hybriddispersionsputz, Sol-Silikat-Putz oder Kunstharzputz, darstellen oder die Grundrezeptur hierfür bilden. Hierbei wird häufig bevorzugt auf Dispersionsfarben, besonders bevorzugt Dispersionsaußenfarben, und/oder Silikonharzfarben, sowie auf Dispersionsputze, Silikonharzputze und/oder Hybridbindemittelputz, wobei unter den Farben Dispersionsfarben und unter den Putzen Dispersionsputze besonders bevoruzugt sind.

Die wässrige Farbtonzusammensetzung A) des erfindungsgemäßen Kit-of-parts-Abtönsystems, enthaltend das mindestens eine Pigment, den mindestens einen HALS-Stabilisator und das Netz- und/oder Dispergiermittel, kann in geeigneten Ausführungsformen ferner mindestens einen Füllstoff umfassen.

Mit den Begriffen "erstes Additiv" und "zweites Additiv" soll verdeutlicht werden, dass in den wässrigen Farbtonzusammensetzungen einerseits und der bzw. den Abtönbasiszusammensetzungen andererseits, sofern in beiden vorhanden, voneinander abweichende Additve zugegen sein können.

Die wässrige Farbtonzusammensetzung des erfindungsgemäßen Kit-of-parts-Abtönsystems, enthaltend das mindestens eine Pigment, den mindestens einen HALS-Stabilisator und das Netz- und/oder Dispergiermittel, weist in vielen Fällen geeigneter Weise einen pH-Wert größer oder gleich 9,0, vorzugsweise im Bereich von 10,0 bis 12,0 und besonders bevorzugt im Bereich von 10,5 bis 11,5, auf oder ist auf einen pH-Wert grö-ßer oder gleich 9,0, vorzugsweise im Bereich von 10,0 bis 12,0 und besonders bevorzugt im Bereich von 10,5 bis 11,5 eingestellt. Der pH-Wert kann zum Beispiel durch Zugabe von Erdalkalimethylsiliconat (z.B. Kaliummethylsiliconat), Alkalihydroxide, z.B. Natriumhydroxid, Wasserglas und/oder Kieselgel zu den wässrigen Farbtonzusammensetzungen eingestellt werden. Alternativ oder zusätzlich kann hierfür auch auf geeignete Basen wie Alkali- oder Erdalkalihydroxide, z.B. Kaliumhydroxid, und/oder Aminverbindungen, bevorzugt Aminoalkohole wie z.B. 2-Amino-2-methyl-1-propanol oder 2-Amino-2-ethyl-1, 3-propandiol zurückgegriffen werden.

Besonders zufriedenstellende Resultate stellen sich auch solchen erfindungsgemäßen Kit-of-parts-Abtönsystem ein, bei denen mindestens eine, insbesondere sämtliche wässrigen Farbtonzusammensetzungen im Wesentlichen frei von Topfkonservierungsmitteln, vorzugsweise frei von Topf- und Filmkonservierungsmitteln, und besonders bevorzugt frei von Konservierungsmitteln, sind. Hierbei kann alternativ und insbesondere zusätzlich vorgesehen sein, dass mindestens eine, insbesondere sämtliche wässrigen Farbtonzusammensetzungen, einen Gehalt an flüchtigen organischen Verbindungen (VOC-Gehalt) kleiner 1,0 g/Liter aufweisen, vorzugsweise im Wesentlichen frei von flüchtigen organischen Verbindungen sind, wobei für die Bestimmung des VOC-Gehalts sowie für die Definition von flüchtigen organischen Verbindungen (VOC) Rückgriff zu nehmen ist auf die Richtlinie 2004/42/EG des Europäischen Parlaments und des Rates vom 21. April 2004.

Die der Erfindung zugrunde liegende Aufgabe wird dabei besonders vorteilhaft mit erfindungsgemäßen Kit-of-parts-Abtönsystemen gelöst, bei denen die mindestens eine wässrige Farbtonzusammensetzung, die im Wesentlichen frei von Topfkonservierungsmitteln, vorzugsweise frei von Topf- und Filmkonservierungsmitteln, und besonders bevorzugt frei von Konservierungsmitteln, ist zugleich auch über einen VOC-Gehalt kleiner 1,0 g/Liter und verfügt und vorzugsweise im Wesentlichen frei von organischen Verbindungen ist.

Die wässrigen Farbtonzusammensetzungen werden dabei im Sinne der Erfindung insbesondere als konservierungsmittelfrei angesehen, wenn darin - im Einklang mit der "Vergabegrundlage für Umweltzeichen" der RAL gemeinnützige GmbH betreffend .,Emissionsarme Innenwandfarben RAL-UZ 102" (Ausgabe Januar 2015) - keine Konservierungsmittel oder Konservierungsmittel wie zum Beispiel MIT (2-Methyl-isothiazolin-3-on) und/oder BIT (1,2-Benzisothiazol-3(2H)-on), auf die Einzelsubstanz bezogen (einschließlich Formaldehyd) in einer Menge < 2 ppm, sowie auch in Bezug auf CIT (5-Chlor-2-Methyl-4-Isothiazolin) in einer Menge < 0,5 ppm enthalten sind.

Hierbei kann insbesondere vorgesehen sein, dass die mindestens eine wässrige Farbtonzusammensetzung, die im Wesentlichen frei von Topfkonservierungsmitteln, vorzugsweise frei von Topf- und Filmkonservierungsmitteln, und besonders bevorzugt frei von Konservierungsmitteln ist, und/oder vorzugsweise über einen VOC-Gehalt kleiner 1,0 g/Liter verfügt und vorzugsweise im Wesentlichen frei von flüchtigen organischen Verbindungen ist, den mindestens einen HALS-Stabilisator oder den mindestens einen HALS-Stabilisator und den mindestens einen UV-Absorber enthält.

Darüber hinaus hat sich als besonders zweckmäßig erwiesen, solche erfindungsgemäßen Kit-of parts-Abtönsysteme zu verwenden, bei denen die mindestens eine Abtönbasiszusammensetzung B) maximal 0,2 Gew.-% an HALS-Stabilisatoren, bezogen auf das Gesamtgewicht der Abtönbasiszusammensetzung B), aufweist, insbesondere im Wesentlichen frei von HALS-Stabilisatoren ist. Alternativ und insbesondere zusätzlich kann dabei vorgesehen sein, dass die mindestens eine Abtönbasiszusammensetzung B) maximal 0,5 Gew.-% an UV-Absorbern, bezogen auf das Gesamtgewicht der Abtönbasiszusammensetzung B), aufweist, insbesondere im Wesentlichen frei von UV-Absorbern ist.

Um die der Erfindung zugrunde liegende Aufgabe zufriedenstellend zu lösen, haben nicht zwangsläufig sämtliche wässrigen Farbtonzusammensetzungen des erfindungsgemäßen Kit-of parts-Abtönsystems neben mindestens einem Pigment einen UV-Absorber und einen HALS-Stabilisator aufzuweisen. Vielmehr können derartige wässrige Farbtonzusammensetzungen begrenzt sein auf solche, die besonders farbtoninstabile und/oder farbtonschwache Pigmente aufweisen.

Grundsätzlich kommen als geeignete Pigmente anorganische Pigmente wie Bunt-, Schwarz- und Weißpigmente (Farbpigmente) sowie organische Pigmente wie Bunt- und Schwarzpigmente in Betracht. Als geeignete Weißpigmente seien exemplarisch Titandioxid, Zinkweiß, Farbenzinkoxid, Zinksulfid, Lithopone, Ettringit und deren beliebige Mischungen genannt.

Unter den anorganischen Schwarzpigmenten kann zum Beispiel ausgewählt werden unter Eisenoxidschwarz, Eisen-Mangan-Schwarz, Spinellschwarz und/oder Ruß.

Unter den anorganischen Buntpigmenten kann zum Beispiel zurückgegriffen werden auf Chromoxid, Chromoxidhydratgrün, Chromgrün, Cobaltgrün, Ultramaringrün, Kobaltblau, Ultramarinblau, Manganblau, Ultramarinviolett, Kobalt- und Manganviolett, Eisenoxidrot, Cersulfid, Molybdatrot, Ultramarinrot, Eisenoxidbraun, Mischbraun, Spinell- und Korundphasen, Chromtitangelb, Zinnzinktitanat, Chromorange, Eisenoxidgelb, Nickeltitangelb, Chromgelb und/oder Bismutvanadat. Zweckmäßige Pigmente umfassen demgemäß zum Beispiel Titandioxid, Zinksulfid, Zinkoxid, Baryt, Ruß, Eisenoxid, Chromoxid, Kobaltblau, Spinellpigment, Nickeltitanat, Chromtitanat und deren beliebige Mischungen.

Es kommen bevorzugt mit den erfindungsgemäßen Kit-of-parts-Abtönsystemen solche Pigmente zum Einsatz, die ausgewählt sind aus anorganischen und organischen Buntpigmenten, welche bei Einsatz von 1 Gewichtsteil, bezogen auf die Menge an Titandioxid, zu einer Farbtonzusammensetzung A) oder zu einer Farbtonzusammensetzung A') führen, die in Gegenwart von Titandioxid in einer Menge oberhalb von 1 Gewichtsteilen, ganz besonders bevorzugt bis maximal 1 Gewichtsteilen, eine 1/3 Standardfarbtiefe gemäß DIN 53235-1:2005-06 (Prüfung von Pigmenten - Prüfungen an standardfarbtiefen Proben - Teil 1: Standardfarbtiefen) und DIN 53235-1:2005-02 (Prüfung von Pigmenten -Prüfungen an Standardfarbtiefen Proben -Teil 2: Einstellen von Proben auf Standardfarbtiefe) in einem transparenten Prüfmedium gemäß der nachfolgenden Rezeptur liefern:

| **Komponenten** | **Gewichtsanteil (%)** |
|---|---|
| Wasser | 9,5 |
| Methylhydroxyethylcellulose | 0,2 |
| Natriumpolyphosphat | 0,1 |
| Natriumhydroxid, 20 % in Wasser | 0,2 |
| Natriumpolyacrylat, 35 % in Wasser | 0,3 |
| Entschäumer. Kombination modifizierter, nichtionogener Fettstoffe, hydrophober Kieselsäure und aromatenfreier Weißöle | 0,3 |
| CaCO₃, D50%: 20,5 µm, D98%: < 50 µm | 20,0 |
| CaCO₃, D50%: 0,8 µm, D98%: < 5 µm | 4,0 |
| CaCO₃, D50%: 13 µm, D98%: < 120 µm | 10,0 |
| CaCO₃, D50%: 26 µm, D98%: < 190 µm | 7,5 |
| Aluminiumsilikat, D50%: 32 µm | 5.0 |
| organisches Bindemittel: weichmacherfreie Dispersion auf Basis von Acryl- und Methacrylsäureestern, 46 % in Wasser, T_{G}: 23 °C | 36,5 |
| Magnesiumsilikat (Talkum), D50%: 4,5 µm | 5,0 |
| Butyldiglykolacetat | 1,2 |
| Chlor-Methyl-Isothiazolinon/Methyl-Isothiazolinon 3:1, 1,5 % in Wasser | 0,1 |
| Methyl-/Benzisothiazolinon 1:1, 10 % in Wasser | 0,1 |

Die Farbtiefe wird dabei durch dasjenige Verhältnis eines in einem Anwendungsmedium, hier der Farbtonzusammensetzung A) oder Farbtonzusammensetzung A'), applizierten Buntpigments zu Titandioxid als Weisspigment ausgedrückt, welches zur Standardfarbtiefe 1/3 gemäß DIN5235:2005-06 führt. Dieses Verhältnis gibt also diejenige Menge an Buntpigment an, welche in Abmischung mit einer gegebenen Menge Titandioxid als Weisspigment die Herstellung einer Farbe bei Standardfarbtiefe 1/3 ermöglicht. In anderen Worten, die Farbtiefe gibt diejenige Menge an Buntpigment an, die notwendig ist, eine definierte Menge an Weißpigment, hier Titandioxid, in der Farbtonzusammensetzung A) bzw. der Farbtonzusammensetzung A') auf eine Standardfarbtiefe ST 1/3 einzustellen.

Unter den Buntpigmenten, die o bis 1 Anteile an Titiandioxid benötigen, um 1 Teil dieses Buntpigments auf 1/3 Standard-Farbtiefe, wie vorangehend definiert, zu bringen, sind ganz besonders bevorzugt anorganische Buntpigmente, insbesondere ausgewählt aus der Gruppe bestehend aus C.I. Pigment Blue 28, C.I. Pigment Blue 29, C.I. Pigment Blue 36, C.I. Pigment Black 22, C.I. Pigment Black 26, C.I. Pigment Black 28, C.I. Pigment Black 30, C.I. Pigment Black 33, C.I. Pigment Brown 24, C.I. Pigment Brown 29, C.I. Pigment Brown 33, C.I. Pigment Brown 35, C.I. Pigment Green 17, C.I. Pigment Green 26, C.I. Pigment Green 50, C.I. Pigment Orange 82, C.I. Pigment Violet 14, C.I. Pigment Violet 15, C.I. Pigment Violet 16, C.I. Pigment Violet 48, C.I. Pigment Red 259, C.I. Pigment Yellow 53, C.I. Pigment Yellow 119, C.I. Pigment Yellow 159, C.I. Pigment Yellow 161, C.I. Pigment Yellow 162, C.I. Pigment Yellow 163, C.I. Pigment Yellow 164, C.I. Pigment Yellow 184, C.I. Pigment Yellow 216, C.I. Pigment Yellow 227 oder beliebige Mischungen dieser Pigmente.

Unter den Buntpigmenten, die mehr als 1 Anteile an Titiandioxid benötigen, um 1 Teil dieses Buntpigments auf 1/3 Standard-Farbtiefe, wie vorangehend definiert, zu bringen, sind besonders bevorzugt anorganische Buntpigmente, ausgewählt aus der Gruppe bestehend aus C.I. Pigment Black 7, C.I. Pigment Black 11, C.I. Pigment Red 101, C.I. Pigment Yellow 42 und beliebigen Mischungen hiervon, sowie besonders bevorzugt organische Buntpigmente, ausgewählt aus der Gruppe bestehend aus C.I. Pigment Black 31, C.I. Pigment Black 32, C.I. Pigment Blue 15, C.I. Pigment Blue 15:1, C.I. Pigment Blue 15:2, C.I. Pigment Blue 15:3, C.I. Pigment Blue 15:4, C.I. Pigment Blue 15:6, C.I Pigment Blue 16, C.I Pigment Blue 60, C.I Pigment Blue 80, C.I. Pigment Brown 25, C.I. Pigment Green 7, C.I. Pigment Green 36, C.I. Pigment Orange 34, C.I. Pigment Orange 36, C.I. Pigment Orange 43, C.I. Pigment Orange 62, C.I. Pigment Orange 73, C.I. Pigment Orange 74, C.I. Pigment Red 19, C.I. Pigment Red 112, C.I. Pigment Red 122, C.I. Pigment Red 168, C.I. Pigment Red 170, C.I. Pigment Red 177, C.I. Pigment Red 179, C.I. Pigment Red 187, C.I. Pigment Red 188, C.I. Pigment Red 202, C.I. Pigment Red 207, C.I. Pigment Red 214, C.I. Pigment Red 254, C.I. Pigment Red 255, C.I. Pigment Red 257, C.I. Pigment Red 264, C.I. Pigment Red 282, C.I. Pigment Violett 19, C.I. Pigment Violett 23, C.I. Pigment Violett 29, C.I. Pigment Yellow 3, C.I. Pigment Yellow 65, C.I. Pigment Yellow 74, C.I. Pigment Yellow 83, C.I. Pigment Yellow 97, C.I. Pigment Yellow 109, C.I. Pigment Yellow 110, C.I. Pigment Yellow 120, C.I. Pigment Yellow 138, C.I. Pigment Yellow 139, C.I. Pigment Yellow 151, C.I. Pigment Yellow 154, C.I. Pigment Yellow 155, C.I. Pigment Yellow 175, C.I. Pigment Yellow 194, C.I. Pigment Yellow 213, C.I. Pigment Yellow 219 und beliebigen Mischungen dieser Pigmente.

Geeignete organische Pigmente können hierbei z.B. auch ausgewählt werden aus der Gruppe bestehend aus Monoazopigmenten, insbesondere C.I. Pigment Orange 5, 13, 38, oder 64, C.I. Pigment Rot 1, 2, 3, 4, 5, 8, 9, 12, 17, 22, 23, 31, 48: 1, 48: 2, 48: 3, 49, 51: 1, 52: 1, 52: 2, 53, 53: 1. 53: 3, 57: 1, 58: 2, 58: 4, 146, 148, 175, 184, 185, 191: 1, 208, 210, 245, 247 und/oder 251, C.I. Pigment Gelb 1, 62, 73, 181, 183 und/oder 191 und/oder C.I. Pigment Violett 32, Diazopigmenten, insbesondere C.I. Pigment Orange 16, 44 und/oder 72 und/oder C.I. Pigment Gelb 12, 13, 14, 16, 17, 81, 106, 113, 126, 127, 174, 176, 18 und/oder 188, Diazokondensationspigmenten, insbesondere C.I. Pigment Gelb 91, 95 und/oder 128 und/oder C.I. Pigment Rot 144, 166, 220, 221, 242 und/oder 262 und/oder C.I. Pigment Braun 23 und/oder 41, Anthrachinonpigmenten, insbesondere C.I. Pigment Gelb 147, 177 und/oder 199 und/oder C.I. Pigment Violett 31, Anthrapyrimidinpigmenten, insbesondere C.I. Pigment Gelb 108, Chinacridonpigmenten, insbesondere C.I. Pigment Orange 48 und/oder 49 und/oder C.I. Pigment Rot 206 und/oder 209 und/oder Diketopyrrolopyrrolpigmenten, insbesondere C.I. Pigment Orange 71 und/oder 81 und/oder C.I. Pigment Rot 270 und/oder 272, Dioxazinpigmenten, insbesondere C.I. Pigment Violett 37, Flavanthronpigmenten, insbesondere C.I. Pigment Gelb 24, Indanthronpigmenten, insbesondere C.I. Pigment Blau 64, Isoindolinpigmenten, insbesondere C.I. Pigment Orange 61 und/oder 69 und/oder C.I. Pigment Rot 260 und/oder C.I. Pigment Gelb 185, Isoindolinonpigmenten, insbesondere C.I. Pigment Gelb 173, Isoviolanthronpigmenten, insbesondere C.I. Pigment Violett 31, insbesondere C.I. Pigment Gelb 117, 129, 153 und/oder 177 und/oder C.I. Pigment Grün 8, Perinonpigmenten, insbesondere C.I. Pigment Rot 194, Perylenpigmenten, insbesondere C.I. Pigment Rot 123, 149, 178, 190 und/oder 224, Pyranthronpigmenten, insbesondere C.I. Pigment Orange 51 und/oder C.I. Pigment Rot 216, Pyrazolochinazolonpigmenten, insbesondere C.I. Pigment Rot 251, Thioindigopigmenten, insbesondere C.I. Pigment Rot 88 und/oder 181 und/oder C.I. Pigment Violett 38, Triarylcarboniumpigmenten, insbesondere C.I. Pigment Blau 1, 61 und/oder 62 und/oder C.I. Pigment Grün 1 und/oder C.I. Pigment Rot 81, 81: 1 und/oder 169 und/oder C.I. Pigment Violett 1, 2, 3 und/oder 27.

Zusätzlich können auch anorganische Weißpigmente eingesetzt werden, insbesondere ausgewählt aus der Gruppe bestehend aus Titandioxid, Zinkweiß, Farbenzinkoxid, Zinksulfid, Lithopone, Ettringit und beliebigen Mischungen hiervon.

Geeignete Pigmentmischungen können sowohl Mischungen aus anorganischen und organischen Pigmenten, als auch Mischungen aus unterschiedlichen anorganischen Pigmenten sowie Mischungen aus unterschiedlichen organischen Pigmenten umfassen.

Grundsätzlich können geeignete Füllstoffe ausgewählt werden aus der Gruppe bestehend aus calcitischen Füllstoffen, insbesondere Calciumcarbonate, Dolomite, Calcite und/oder Aragonite, silikatischen Füllstoffen, insbesondere Quarzite, Magnesiumsilikate und Aluminosilikate, Schichtsilikate, Feldspate, Vulkanite und/oder Kieselerden wie Kieselgur und Diatomeenerden, sulfatischen Füllstoffen, insbesondere Bariumsulfat, chemisch modifizierten Füllstoffen und aus beliebigen Mischungen dieser Füllstoffe. Werden Schichtsilikate als Füllstoffe eingesetzt, handelt es sich hierbei in der Regel um solche, in die Wasser unter Normaldruck- und Raumtemperaturbedingungen nicht oder nicht in signifikanten Mengen eingelagert wird und die demgemäß nicht als Verdicker fungieren können. Geeignete Füllstoffe, z.B. calcitische Füllstoffe wie Calciumcarbonate, können eine durchschnittliche Partikelgröße D50 im Bereich von 0,1 bis 50 µm, bevorzugt im Bereich von 0,5 bis 40 µm, aufweisen und z.B. auch in multimodaler, z.B. bi-, tri- oder tetramodaler Verteilung vorliegen.

Die Partikelgröße D50 der vorangehend genannten partikulären Feststoffe, inbesondere Füllstoffe, wird gemäß DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnung von mittleren Partikelgrö-Ben/-durchmessern und Momenten aus Partikelgrößenverteilungen) ermittelt. Für die Bestimmung der D50-Werte kann dabei z.B. auf den sogenannten Laser Scattering Particle Size Distribution Analyser, wie von der Firma Horiba unter der Gerätebezeichnung "LA 950 V2" erhältlich, zurückgegriffen werden.

Das mindestens eine erste Additiv in der wässrigen Farbtonzusammensetzung, enthaltend das mindestens eine Pigment, den mindestens einen HALS-Stabilisator und das Netz- und Dispergiermittel, können insbesondere ausgewählt sein aus der Gruppe bestehend aus Entschäumern, z.B. aromatenfreie Weißöle, Konservierungsmittel, Rheologieadditiven, insbesondere Verdickern, Schichtsilikaten, organisch modifizierten Schichtsilikaten, Oberflächenadditiven, Puffersubstanzen, Neutralisationsmittel, pH-Regulatoren und Mischungen dieser Verbindungen.

Geeignete Verdicker in der wässrigen Farbtonzusammensetzung, enthaltend das mindestens eine Pigment, den mindestens einen HALS-Stabilisator und das Netz- und Dispergiermittel, sind zweckmäßiger Weise ausgewählt aus der Gruppe bestehend aus Polyacrylat-Verdickern, Polyurethan-Verdickern, Polyharnstoff-Verdickern, Cellulose-Verdickern, insbesondere Hydroxyethylcellulose und/oder Methylcellulose, z.B. Methylhydroxyethylcellulose, Polyvinylalkohol-Verdickem, Polyetherpolyol-Verdickern, Schichtsilikat-Verdickern, Polysaccharid-Verdickern, insbesondere Xanthan und/oder Agar Agar, und beliebigen Mischungen hiervon. Geeignete Verdickersysteme können z.B. auch auf der kombinierten Verwendung von rheologiebeeinflussenden Schichtsilikaten und/oder organisch modifizierten Schichtsilikaten, insbesondere organisch modifizierten Schichtsilikaten, und Polysacharidverdickern, zum Beispiel Xanthan, basieren. Unter rheologiebeeinflussende Schichtsilikate im Sinne der vorliegenden Erfindung sollen solche Schichtsilikate verstanden werden, bei denen Wasser in die Schichtsilikate eingelagert werden kann und die aufgrund dieser Eigenschaft als Verdicker fungieren können. Die genannten rheologiebeeinflussenden Schichtsilikate und die organisch modifizierten Schichtsilikate können auch unter der Bezeichnung Schichtsilikat-Verdicker zusammengefasst werden.

Für das mindestens eine Netz- und/oder Dispergiermittel in der wässrigen Farbtonzusammensetzung, enthaltend das mindestens eine Pigment, den mindestens einen HALS-Stabilisator und das Netz- und Dispergiermittel, greift man bevorzugt auf solche zurück, die ausgewählt sind aus der Gruppe bestehend aus Polycarboxylaten, insbesondere Salze von Polyacrylsäuren, Polyphosphaten, insbesondere lineare Polyphosphate, z.B. Natriumpolyphosphat, und/oder zyklische Metaphosphate, Polyetherphosphaten, Polycarbonsäurepolymeren, z.B. Polyacrylate wie Natriumpolyacrylate, Acrylblockcopolymeren, insbesondere CFRP (Controlled Free Radical Polymerisation)-basierten Acrylblockcopolymeren, ethoxylierten Fettalkoholen, nichtionischen gesättigten langkettigen Alkoholen, Fettalkoholsulfaten, Alkylphosphonaten, Polysiloxanethern, insbesondere Methoxypolyethoxypropyltrisiloxan, Alkindiol-ethoxylaten, Fluortensiden und beliebigen Mischungen hiervon.

Das Bindemittel der Abtönbasiszusammensetzung umfasst vorzugsweise ein organisches Bindemittel in Form einer wässrigen Dispersion auf Basis von Polymeren enthaltend Acrylate, Vinylacetat und/oder Styrol, insbesondere auf Basis von Reinacrylaten und/oder Terpolymeren, oder ein anorganisches Bindemittel auf Basis von Wasserglas und/oder Kieselsol, oder ein Hybridbindemittel, insbesondere eine wässrige Organosilikat-Hybriddispersion, oder ein Bindemittel auf Basis eines Acrylharzes, Acrylsiliconharzes, Siliconharzes, Urethanharzes, ungesättigtem Polyesterharzes oder Alkydharzes.

Grundsätzlich kommen als geeignete organische Bindemittel für die wässrigen Farbtonzusammensetzungen wie auch für die Abtönbasiszusammensetzungen Vinylacetat/EthylenCopolymere, Copolymere auf Basis von Vinylaromaten, insbesondere Styrol, und Acrylaten oder auf Basis von Reinacrylaten, insbesondere auf der Basis von Reinacrylaten in Betracht. Reinacrylate umfassen Homo- und insbesondere Copolymere von (Meth)acrylaten, d.h. Acrylaten und/oder Methacrylaten, gegebenenfalls auch mit (Meth)acrylsäure, d.h. Acryl- und/oder Methacrylsäure, als Comonomerbaustein. Das organische Bindemittel wird in einer besonders zweckmäßigen Ausgestaltung in Form einer wässrigen Bindemitteldispersion eingesetzt. Demgemäß kommen als organische Bindemittel insbesondere auch solche in Frage, bei denen die in Wasser dispergierten oder dispergierbaren Polymere aus gleichen oder verschiedenen Monomeren gebildet sind, wobei mindestens eines der Monomere ein Acrylsäureester, Methacrylsäurester, Acrylsäure, Methacrylsäure, Vinylacetat, Vinylchlorid, Versatat, Acrylnitril oder eine vinylaromatische Verbindung darstellt. In einer zweckmäßigen Ausgestaltung basiert das in Wasser dispergierte oder dispergierbare Polymer dabei auf i) Acrylsäureestern und Vinylaromaten, insbesondere Styrol, oder auf ii) Acrylsäureestern und Vinylestern, insbesondere der Versatinsäure, und gegebenenfalls Vinylaromaten, insbesondere Styrol. Geeignete Acrylatbindemittel verfügen in einer zweckmäßigen Ausgestaltung über eine Molmasse im Bereich von 300.000 g/mol und darüber. Besonders geeignete organische Bindemittel weisen eine Mindestfilmbildetemperatur (MFT-Wert), bestimmt gemäß ISO 2115:1996 (Ausgabedatum: 2001-04), kleiner oder gleich 10, insbesondere kleiner oder gleich 7 und besonders bevorzugt kleiner gleich 5 auf. Der Trockengewichtsanteil dieser organischen Bindemittel kann grundsätzlich in weiten Bereichen variiert werden.

Das Bindemittel liegt, bezogen auf den Feststoffanteil desselben, in der Abtönbasiszusammensetzung B) bevorzugt in einer Menge im Bereich von bis 10 bis 60 Gew.-%, besonders bevorzugt im Bereich von 15 bis 55 Gew.-% und insbesondere im Bereich von 20 bis 50 Gew.-%, jeweils bezogen auf das Gesamtgewicht der Abtönbasiszusammensetzung, vor.

Unter den erfindungsgemäßen Kit-of-parts-Abtönsystemen sind solche besonders geeignet, deren Abtönbasiszusammensetzung B) maximal 1,0 Gew.-%, besonders bevorzugt maximal 0,1 Gew.-%, bezogen auf das Gesamtgewicht der Abtönbasiszusammensetzung, Titandioxid enthält und vorzugsweise im Wesentlichen frei von Titandioxid ist. Hierbei wird dann insbesondere auf transparente Abtönbasiszusammensetzungen zurückgegriffen.

Der mindestens eine HALS-Stabilisator in der wässrigen Farbtonzusammensetzung des erfindungsgemäßen Kit-of-parts-Abtönsystems, enthaltend das mindestens eine Pigment, diesen mindestens einen HALS-Stabilisator und das Netz- und Dispergiermittel, kann insbesondere ausgewählt werden aus der Gruppe bestehend aus N-substituierten Polyalkylpiperidinen, N-substituierten Polyalkylpiperazinonen und deren beliebigen Mischungen.

Besonders geeignete HALS-Stabilisator umfassen 2,2,6,6-Tetraalkylpiperidine, insbesondere 2,2,6,6-Tetramethylpiperidine, wobei das sekundäre Stickstoffatom des Piperidinrings gegebenenfalls substituiert ist, insbesondere mit Alkylgruppen oder mit Carbonyl- oder Thiocarbonylgruppen, 1,2,2,6,6-Pentamethylpiperidinderivative, insbesondere 4-(Meth)acryloyloxy-2,2,6,6-tetramethylpiperidin, 4-(Meth)acryloylamino-2,2,6,6-tetramethylpiperidin, 4-(Meth)acryloyloxy-1,2,2,6,6-pentamethylpiperidin oder 4-(Meth)acryloyl-amino-1,2,2,6,6-pentamethylpiperidin, Bis(2,2,6,6-tetramethyl-4-piperidyl)- estern, insbesondere Bis(2,2,6,6-tetramethyl-4-piperidyl)-sebacat, Bis(1-octyloxy-2,2,6,6-tetramethyl-4-piperidyl)-sebacat, 8-Acetyl-3-dodecyl-7,7,9,9-tetramethyl-1,3,8-triazaspiro(4,5)-decane-2,5-dion, Bis(2,2,6,6-tetramethyl-4-piperidyl)succinat, Poly(N-β-hydroxyethyl-2,2,6,6-tetramethyl-4-hydroxy-piperidin-succinat, Bis(N-methyl-2,2,6,5-tetramethyl-4-piperidyl)-sebacat, 5,5-Trimethyl-hexanonsäure-2-[2,2,6,6-tetramethyl-4-(3,5,5-trimethyl-hexanoyloxy)-piperidin-1-yl]-ethyl-ester und deren beliebigen Mischungen.

Der mindestens eine UV-Absorber in der wässrigen Farbtonzusammensetzung, enthaltend das mindestens eine Pigment, den mindestens einen HALS-Stabilisator das Netz- und Dispergiermittel und den UV-Absorber, ist zweckmäßiger Weise ausgewählt aus der Gruppe bestehend aus Triazinen, Benzotriazolen, Benzoxazinonen und deren beliebigen Mischungen. Bevorzugt wird hierbei auf Verbindungen der Klasse der Benzotriazole zurückgegriffen. Unter diesen haben sich 2-(4,6-Diphenyl-1,3,5-triazin-2-yl)-5-(hexyl)oxy-phenol, (2-(2'-Hydroxyphenyl)-4,6- bis(4-phenylphenyl)-triazin, 2-Hydroxyphenyl-s-triazin, (2-(2'-Hydroxy-5'-methylphenyl)benzotriazol), Bis(2,2,6,6-tetramethyl-1-octyloxypiperidin-4-yl)-1,10-decandioat, 1,8-Bis[(2,2,6,6-tetramethyl-4-((2,2,6,6-tetramethyl-1-octyloxypiperidin-4-yl)-decan-1,10-dioyl)piperidin-1-yl)oxy]octan, C7-C9-Alkyl-3-[3-(2H-benzotriazol-2-yl)-5-(1,1-dimethylethyl)-4-hydroxyphenyl]propionaten als besonders geeignet zur Lösung der der Erfindung zugrunde liegenden Aufgabe erwiesen. Es können auch beliebige Mischungen dieser Verbindungen eingesetzt werden.

Hierbei wird unter den HALS-Stabilisatoren besonders bevorzugt zurückgegriffen auf Bis(2,2,6,6-tetraalkyl-4-piperidyl)ester, insbesondere Bis(2,2,6,6-tetramethyl-4-piperidyl)-sebacat, Bis(1-octyloxy-2,2,6,6-tetramethyl-4-piperidyl)-sebacat, 8-Acetyl-3-dodecyl-7,7,9,9-tetramethyl-1,3,8-triazaspiro(4,5)-decane-2,5-dion, Bis(2,2,6,6-tetramethyl-4-piperidyl)succinat, Poly(N-β-hydroxyethyl-2,2,6,6-tetramethyl-4-hydroxy-piperidin-succinat, Bis(N-methyl-2,2,6,6-tetramethyl-4-piperidyl)-sebacat und/oder 5,5-Trimethyl-hexanonsäure-2-[2,2,6,6-tetra-methyl-4-(3,5,5-trimethyl-hexanoyloxy)-piperidin-1-yl]-ethyl-ester.

Alternativ oder bevorzugt zusätzlich wird unter den UV-Absorbern besonders bevorzugt zurückgegriffen auf C7-C9-Alkyl-3-[3-(2H-benzotriazol-2-yl)-5-(1,1-dimethydethyl)-4-hydroxyphenyl]propionate.

Die wässrigen Farbtonzusammensetzungen, enthaltend das mindestens eine Pigment, den mindestens einen UV-Absorber, den mindestens einen HALS-Stabilisator und das Netz- und Dispergiermittel, enthalten bevorzugt:
2 bis 80 Gew.-%, vorzugsweise 5 bis 75 Gew.-% und besonders bevorzugt 10 bis 70 Gew.-%, an dem mindestens einen Pigment,
0,5 bis 6 Gew.-%, vorzugsweise 1 bis 4 Gew.-% und besonders bevorzugt 1,5 bis 3 Gew.-%, an dem mindestens einen UV-Absorber,
0,1 bis 5 Gew.-%, vorzugsweise 0,2 bis 3 Gew.-% und besonders bevorzugt 0,5 bis 2,5 Gew.- %, an dem mindestens einen HALS-Stabilisator,
0,2 bis 20 Gew.-%, vorzugsweise 1 bis 18 Gew.-% und besonders bevorzugt 2 bis 15 Gew.-%, an dem mindestens ein Netz- und/oder Dispergiermittel,
o bis 5 Gew.-%, vorzugsweise 0,01 bis 3,5 Gew.-% und besonders bevorzugt 0,1 bis 2,5 Gew.-%, an dem mindestens einen ersten Additiv,
0,01 bis 70 Gew.-%, vorzugsweise 0,1 bis 65 Gew.-% und besonders bevorzugt 1 bis 60 Gew.-%, an Füllstoffen,
0,1 bis 20 Gew.-%, vorzugsweise 0,5 bis 10 Gew.-% und besonders bevorzugt 1 bis 6 Gew.- %, an mindestens einem Feuchthaltemittel,
wobei die Anteile der die Farbtonzusammensetzung bildenden Komponenten Feststoffanteile oder, sofern bei 20°C nicht als Feststoff vorliegend, die nicht-wässrigen Wirkstoffanteile darstellen und wobei die Menge an die Zusammensetzung bildenden Komponenten, einschließlich Wasser, stets so gewählt ist, dass sich in der Summe 100,0 Gew.-% ergeben

Aus den erfindungsgemäßen Kit-of-parts-Abtönsystemen sind insbesondere wässrige Beschichtungsmassen zugänglich ausgewählt aus der Gruppe, bestehend aus Anstrichfarben, insbesondere Dispersionsfarben, Silikatfarben, Silikonharzfarben oder Dispersionsilikatfarben, Sol-Silikatfarben und/oder Hybridbindemittelfarben, Wasserlacken und oder Putzen, insbesondere Dispersionsputzen, Silikatputzen, Dispersionssilikatputzen, Silikonharzputzen, Hybridbindemittelputzen, Organosilikat-Hybriddispersionsputzen, Sol-Silikat-Putzen oder Kunstharzputzen.

Besonders bevorzugt werden die erfindungsgemäßen Kit-of-parts-Abtönsysteme eingesetzt, um abgetönte Fassadenfarben zu erhalten.

Mithilfe der erfindungsgemäßen Kit-of-parts-Abtönsysteme sind zum Beispiel abgetönte Beschichtungsmassen in Form von Anstrichsystemen zugänglich. Hierbei handelt es sich insbesondere um abgetönte wässrige Lasuren, Wasserlacke, Anstrichfarben, Kalkfarben, Silikatfarben, Silikonharzfarben, Dispersionssilikatfarben, Sol-Silikat-Farben und Hybridbindemittelfarben wie auch Bodenbeschichtungen.

Ferner sind mit den erfindungsgemäßen Kit-of-parts-Abtönsystemen abgetönte Putzsysteme und Putze, insbesondere Dispersionsputze, Silikatputze, Dispersionssilikatputze, Silikonharzputze, Hybridbindemittelputze, Organosilikat-Hybriddispersionsputze, Sol-Silikat-Putze und/oder Kunstharzputze zugänglich.

Unter den Anstrichfarben sind mithilfe der erfindungsgemäßen Kit-of-parts-Abtönsysteme besonders zufriedenstellend auch abgetönte Dispersionsfarben, bevorzugt Dispersionsaußenfarben, zugänglich. Unter den mit den erfindungsgemäßen Kit-of-parts-Abtönsystemen erhältlichen Hybridbindemittelfarben wird bevorzugt auf solche zurückgegriffen, die auf einer wässrigen Organosilikat-Hybrid-Dispersion basieren.

Die der Erfindung zugrunde liegende Aufgabe wird des Weiteren gelöst durch abgetönte Anstrichsysteme, erhalten oder erhältlich aus den erfindungsgemäßen Kit-of-parts-Abtönsystemen. Hierbei ist jeweils eine Zusammensetzung A) mit einer Abtönbasiszusammensetzung B) zu vermischen. Bei diesen erfindungsgemäßen Anstrichsystemen kann es sich um abgetönte wässrige Lasuren, Wasserlacke, Anstrichfarben, insbesondere Dispersionsfarben, besonders bevorzugt Dispersionsaußenfarben, Dispersionssilikatfarben, Kalkfarben, Silikatfarben, Silikonharzfarben, Sol-Silikat-Farben und Hybridbindemittelfarben, insbesondere auf Basis einer wässrigen Organosilikat-Hybrid-Dispersion oder Bodenbeschichtungen handeln.

Die der Erfindung zugrunde liegende Aufgabe wird des Weiteren gelöst durch abgetönte Putzsysteme, erhalten oder erhältlich aus den erfindungsgemäßen Kit-of-parts-Abtönsystemen. Hierbei ist jeweils eine Zusammensetzung A) mit einer Abtönbasiszusammensetzung B) zu vermischen. Bei diesen erfindungsgemäßen Putzsystemen kann es sich um abgetönte Dispersionsputze, Silikatputze, Dispersionssilikatputze, Silikonharzputze, Hybridbindemittelputze, Organosilikat-Hybriddispersionsputze, Sol-Silikat-Putze und/oder Kunstharzputze handeln.

Die der Erfindung zugrunde liegende Aufgabe wird des Weiteren gelöst durch einen Anstrich, erhalten oder erhältlich durch Auftragen des erfindungsgemäßen abgetönten Anstrichsystems auf eine Substratoberfläche.

Die der Erfindung zugrunde liegende Aufgabe wird des Weiteren gelöst durch einen Putz, erhalten oder erhältlich durch Auftragen des erfindungsgemäßen abgetönten Putzsystems auf eine Substratoberfläche.

Schließlich wird die der Erfindung zugrunde liegende Aufgabe gelöst durch ein Verfahren zum Abtönen einer wässrigen Farbtonzusammensetzung, umfassend die Schritte
i) Zurverfügungstellung von mindestens einer wässrigen Farbtonzusammensetzung, vorzugsweise von mindestens zwei und besonders bevorzugt von mindestens drei wässrigen Farbtonzusammensetzungen, gemäß dem erfindungsgemäßen Kit-of-parts-Abtönsystem,
ii) Zurverfügungstellung der mindestens einen Abtönbasiszusammensetzung gemäß dem erfindungsgemäßen Kit-of-parts-Abtönsystem und
iii) Vermischen der Farbtonzusammensetzung gemäß i) und der Abtönbasiszusammensetzung gemäß ii) unter Erhalt eines erfindungsgemäßen abgetönten Anstrich- oder Putzsystems.

Die Farbtonstabilität von Beschichtungen erhalten mit den erfindungsgemäßen Kit-of-parts Abtönsystemen kann mithilfe der DIN EN ISO 11341:2004-12 ermittelt werden. Geeignete Messparameter stellen sich dabei wie folgt dar: Versuchsdauer aoooh; Messung der Farbtonstabilität alle 170h; abwechselnd Bestrahlung mit Xenon-Licht für 102 min und Wasserbelastung (5 sec Sprühen / 55 sec trocken) für 18 min; Luftfeuchtigkeit 50%; Kammertemperatur 38°C; Schwarzpanel-Temperatur 65°C).

Es hat sich überraschend gezeigt, dass mithilfe der erfindungsgemäßen Kit-of-parts Abtönsysteme abgetönte Beschichtungsmassen zugänglich sind, die zu Beschichtungen mit ausgeprägter Farbtonstabilität führen. Von besonderem Vorteil ist hierbei auch, dass sich mit den erfindungsgemäßen erfindungsgemäßen Kit-of-parts Abtönsystemen dieser Vorteil für die Vielzahl an mit erfindungsgemäßen Abtönsystemen beispielsweise in Point-of-sale-Abtönmaschinen verwendeten Farbtonzusammensetzungen sicherstellen lässt.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausfiihrungsformen wesentlich sein.

## Patentansprüche

1. Kit-of parts-Abtönsystem für die Farbeinstellung von, insbesondere wässrigen, Beschichtungsmassen, umfassend
A) mindestens eine wässrige Farbtonzusammensetzung, vorzugsweise mindestens zwei wässrige Farbtonzusammensetzungen,
wobei mindestens eine wässrige Farbtonzusammensetzung, vorzugsweise eine Vielzahl an wässrigen Farbtonzusammensetzungen,
mindestens ein Pigment,
mindestens einen HALS-Stabilisator (Hindered Amine Light Stabilizer),
mindestens ein Netz- und/oder Dispergiermittel,
mindestens ein Feuchthaltemittel, insbesondere Polyalkylenglykole,
mindestens einen UV-Absorber und
Wasser
sowie gegebenenfalls mindestens ein erstes Additiv und/oder gegebenenfalls mindestens einen Füllstoff,
enthalten oder hieraus bestehen, und
B) mindestens eine, insbesondere genau eine, Abtönbasiszusammensetzung, bestehend aus oder enthaltend mindestens ein Bindemittel, mindestens ein flüssiges Medium und gegebenenfalls mindestens ein zweites Additiv,
oder umfassend
A') mindestens eine wässrige Farbtonzusammensetzung, vorzugsweise mindestens zwei wässrige Farbtonzusammensetzungen,
wobei mindestens eine wässrige Farbtonzusammensetzung, vorzugsweise eine Vielzahl an wässrigen Farbtonzusammensetzungen,
mindestens ein Pigment,
mindestens ein Netz- und/oder Dispergiermittel,
mindestens ein Feuchthaltemittel, insbesondere Polyalkylenglykole, und
Wasser
sowie gegebenenfalls mindestens ein erstes Additiv
enthalten oder hieraus bestehen,
wobei die Farbtonzusammensetzung A') im Wesentlichen frei von HALS-Stabilisatoren und im Wesentlichen frei von UV-Absorbem ist,
B) mindestens eine, insbesondere genau eine, Abtönbasiszusammensetzung, bestehend aus oder enthaltend mindestens ein Bindemittel, mindestens ein flüssiges Medium und gegebenenfalls mindestens ein zweites Additiv, und
C) mindestens eine, insbesondere pastöse, Zusammensetzung enthaltend mindestens einen HALS-Stabilisator und mindestens einen UV-Absorber.

2. Kit-of-parts-Abtönsystem nach Anspruch 1, **dadurch gekennzeichnet, dass** die wässrige Farbtonzusammensetzung A) enthaltend das mindestens eine Pigment, den mindestens einen HALS-Stabilisator und das Netz- und/oder Dispergiermittel, einen pH-Wert größer oder gleich 9,0, vorzugsweise im Bereich von 10,0 bis 12,0 und besonders bevorzugt im Bereich von 10,5 bis 11,5, aufweist oder auf einen pH-Wert größer oder gleich 9,0, vorzugsweise im Bereich von 10,0 bis 12,0 und besonders bevorzugt im Bereich von 10,5 bis 11,5 eingestellt ist.

3. Kit-of-parts-Abtönsystem nach einem der vorangehenden Ansprüche, **dadurch gekennzeichnet, dass**
das mindestens eine Pigment in der wässrigen Farbtonzusammensetzung A), enthaltend dieses mindestens eine Pigment, den mindestens einen HALS-Stabilisator und das Netz- und/oder Dispergiermittel, ausgewählt ist aus der Gruppe bestehend aus anorganischen Pigmenten, insbesondere umfassend anorganische Weißpigmente und/oder anorganische Buntpigmente, organischen Pigmenten und Mischungen hiervon.

4. Kit-of parts-Abtönsystem nach einem der vorangehenden Ansprüche, **dadurch gekennzeichnet, dass**
das Pigment ausgewählt ist aus anorganischen und organischen Buntpigmenten, die bei Einsatz von 1 Gewichtsteil, bezogen auf die Menge an Titandioxid, zu einer Farbtonzusammensetzung A) oder zu einer Farbtonzusammensetzung A') führen, die in Gegenwart von Titandioxid in einer Menge oberhalb von 1 Gewichtsteilen, ganz besonders bevorzugt bis maximal 1 Gewichtsteilen, eine 1/3 Standardfarbtiefe gemäß DIN 53235-1:2005-06 (Prüfung von Pigmenten - Prüfungen an standardfarbtiefen Proben - Teil 1: Standardfarbtiefen) und DIN 53235-1:2005-02 (Prüfung von Pigmenten -Prüfungen an Standardfarbtiefen Proben -Teil 2:
Einstellen von Proben auf Standardfarbtiefe) in einem transparenten Prüfmedium gemäß folgender Rezeptur liefern:
| Komponenten | Gewichtsanteil (%) |
|---|---|
| Wasser | 9,5 |
| Methylhydroxyethylcellulose | 0,2 |
| Natriumpolyphosphat | 0,1 |
| Natriumhydroxid, 20 % in Wasser | 0,2 |
| Natriumpolyacrylat, 35 % in Wasser | 0,3 |
| Entschäumer | 0,3 |
| CaCO₃, D50%: 20,5 µm, D98%: < 50 µm | 20,0 |
| CaCO₃, D50%: 0,8 µm, D98%: < 5 µm | 4,0 |
| CaCO₃, D50%: 13 µm, D98%: < 120 µm | 10,0 |
| CaCO₃, D50%: 26 µm, D98%: < 190 µm | 7,5 |
| Aluminiumsilikat, D50%: 32 µm | 5,0 |
| organisches Bindemittel: weichmacherfreie Dispersion auf Basis von Acryl- und Methacrylsäureestern, 46 % in Wasser, T_{G}: 23 °C | 36,5 |
| Magnesiumsilikat (Talkum), D50%: 4,5 µm | 5,0 |
| Butyldiglykolacetat | 1,2 |
| Chlor-Methyl-Isothiazolinon/Methyl-Isothiazolinon 3:1, 1,5 % in Wasser | 0,1 |
| Methyl-/Benzisothiazolinon 1:1, 10 % in Wasser | 0,1 |

5. Kit-of parts-Abtönsystem nach einem der vorangehenden Ansprüche, **dadurch gekennzeichnet, dass**
der mindestens eine HALS-Stabilisator in der wässrigen Farbtonzusammensetzung A), enthaltend das mindestens eine Pigment, diesen mindestens einen HALS-Stabilisator und das Netz- und Dispergiermittel, ausgewählt ist aus der Gruppe bestehend aus N-substituierten Polyalkylpiperidinen, N-substituierten Polyalkylpiperazinonen, Benzotriazol-Derivaten und deren beliebigen Mischungen.

6. Kit-of parts-Abtönsystem nach Anspruch 5, **dadurch gekennzeichnet, dass** der mindestens eine HALS-Stabilisator ausgewählt ist aus der Gruppe bestehend aus 2,2,6,6-Tetraalkylpiperidinen, insbesondere 2,2,6,6-Tetramethylpiperidinen, wobei das sekundäre Stickstoffatom des Piperidinrings gegebenenfalls substituiert ist, insbesondere mit Alkylgruppen oder mit Carbonyl- oder Thiocarbonylgruppen, 1,2,2,6,6-Pentamethylpiperidinderivativen, insbesondere 4-(Meth)acryloyloxy-2,2,6,6-tetramethylpiperidin, 4-(Meth)acryloylamino-2,2,6,6-tetramethylpiperidin, 4-(Meth)acryloyloxy-1,2,2,6,6-pentamethylpiperidin oder 4-(Meth)acryloyl-amino-1,2,2,6,6-pentamethylpiperidin, Bis(2,2,6,6-tetramethyl-4-piperidyl)estem, insbesondere Bis(2,2,6,6-tetramethyl-4-piperidyl)-sebacat, Bis(1-octyloxy-2,2,6,6-tetramethyl-4-piperidyl) sebacat, 8-Acetyl-3-dodecyl-7,7,9,9-tetramethyl-1,3,8-triazaspiro(4,5)-decane-2,5-dion, Bis(2,2,6,6-tetramethyl-4-piperidyl)succinat, Poly(N-β-hydroxyethyl-2,2,6,6-tetramethyl-4-hydroxy-piperidin-succinat, Bis(N-methyl-2,2,6,6-tetramethyl-4-piperidyl)-sebacat, 5,5-Trimethyl-hexanonsäure-2-[2,2,6,6-tetra-methyl-4-(3,5,5-trimethyl-hexanoyloxy)-piperidin-1-yl]-ethyl-ester und deren beliebigen Mischungen.

7. Kit-of-parts-Abtönsystem nach einem der vorangehenden Ansprüche, **dadurch gekennzeichnet, dass**
der mindestens eine UV-Absorber in der wässrigen Farbtonzusammensetzung, enthaltend das mindestens eine Pigment, den mindestens einen HALS-Stabilisator, das Netz- und Dispergiermittel und den UV-Absorber, ausgewählt ist aus der Gruppe bestehend aus Triazinen, Benzotriazolen, Benzoxazinonen und deren beliebigen Mischungen.

8. Kit-of parts-Abtönsystem nach Anspruch 7, **dadurch gekennzeichnet, dass** der mindestens eine UV-Absorber ausgewählt ist aus der Gruppe bestehend aus 2-(4,6-Diphenyl-1,3,5-triazin-2-yl)-5-(hexyl)oxy-phenol, (2-(2'-Hydroxyphenyl)-4,6-bis(4-phenylphenyl)-triazin, 2-Hydroxyphenyl-s-triazin, (2-(2'-Hydroxy-5'-methylphenyl)benzotriazol), Bis(2,2,6,6-tetramethyl-1-octyloxypiperidin-4-yl)-1, 1 0-decandioat, 1,8-Bis[(2,2,6,6-tetramethyl-4-((2,2,6,6-tetramethyl-1-octyloxypiperidin-4-yl)-decan-1,10-dioyl)piperidin-1-yl)oxy]octan, C7-C9-Alkyl-3-[3-(2H-benzotriazol-2-yl)-5-(1,1-dimethylethyl)-4-hydroxyphenyl]propionaten und deren beliebigen Mischungen.

9. Kit-of-parts-Abtönsystem nach einem der vorangehenden Ansprüche, **dadurch gekennzeichnet, dass**
der HALS-Stabilisator einen Bis(2,2,6,6-tetraalkyl-4-piperidyl)ester, insbesondere Bis(2,2,6,6-tetramethyl-4-piperidyl)-sebacat, Bis(1-octyloxy-2,2,6,6-tetramethyl-4-piperidyl) sebacat, 8-Acetyl-3-dodecyl-7,7,9,9-tetramethyl-1,3,8-triazaspiro(4,5)-decane-2,5-dion, Bis(2,2,6,6-tetramethyl-4-piperidyl)succinat, Poly(N-β-hydroxyethyl-2,2,6,6-tetramethyl-4-hydroxy-piperidin-succinat, Bis(N-methyl-2,2,6,6-tetramethyl-4-piperidyl)-sebacat und/oder 5,5-Trimethyl-hexanonsäure-2-[2,2,6,6-tetra-methyl-4-(3,5,5-trimethyl-hexanoyloxy)-piperidin-1-yl]-ethyl-ester, umfasst oder darstellt und dass
der UV-Absorber ein C7-C9-Alkyl-3-[3-(2H-benzotriazol-2-yl)-5-(1,1-dimethylethyl)-4-hydroxyphenyl]propionat umfasst oder darstellt.

10. Kit-of-parts-Abtönsystem nach einem der vorangehenden Ansprüche, **dadurch gekennzeichnet, dass**
in der wässrigen Farbtonzusammensetzung A), enthaltend das mindestens eine Pigment, den mindestens einen UV-Absorber, den mindestens einen HALS-Stabilisator und das Netz- und Dispergiermittel, enthalten sind:
2 bis 80 Gew.-%, vorzugsweise 5 bis 75 Gew.-% und besonders bevorzugt 10 bis 70 Gew.-%, an dem mindestens einen Pigment,
0,5 bis 6 Gew.-%, vorzugsweise 1 bis 4 Gew.-% und besonders bevorzugt 1,5 bis 3 Gew.-%, an dem mindestens einen UV-Absorber,
0,1 bis 5 Gew.-%, vorzugsweise 0,2 bis 3 Gew.-% und besonders bevorzugt 0,5 bis 2,5 Gew.-%, an dem mindestens einen HALS-Stabilisator,
0,2 bis 20 Gew.-%, vorzugsweise 1 bis 18 Gew.-% und besonders bevorzugt 2 bis 15 Gew.-%, an dem mindestens ein Netz- und/oder Dispergiermittel,
0 bis 5 Gew.-%, vorzugsweise 0,01 bis 3,5 Gew.-% und besonders bevorzugt 0,1 bis 2,5 Gew.-%, an dem mindestens einen ersten Additiv,
0 bis 70 Gew.-%, vorzugsweise 0,1 bis 65 Gew.-% und besonders bevorzugt 1 bis 60 Gew.-%, an Füllstoffen,
0,1 bis 20 Gew.-%, vorzugsweise 0,5 bis 10 Gew.-% und besonders bevorzugt 1 bis 6 Gew.-%, an mindestens einem Feuchthaltemittel,
wobei die Anteile der die Farbtonzusammensetzung bildenden Komponenten Feststoffanteile oder, sofern bei 20°C nicht als Feststoff vorliegend, die nicht-wässrigen Wirkstoffanteile darstellen und wobei die Menge an die Zusammensetzung bildenden Komponenten, einschließlich Wasser, stets so gewählt ist, dass sich in der Summe 100,0 Gew.-% ergeben.

11. Kit-of parts-Abtönsystem nach einem der vorangehenden Ansprüche, **dadurch gekennzeichnet, dass**
die Abtönbasiszusammensetzung B) im Wesentlichen frei von Titandioxid ist und bevorzugt eine transparente Abtönbasiszusammensetzung darstellt.

12. Kit-of parts-Abtönsystem nach einem der vorangehenden Ansprüche, **dadurch gekennzeichnet, dass**
mindestens eine wässrige Farbtonzusammensetzung im Wesentlichen frei von Topfkonservierungsmitteln, vorzugsweise frei von Topf- und Filmkonservierungsmitteln, und besonders bevorzugt frei von Konservierungsmitteln, ist und/oder, insbesondere und, dass
mindestens eine, insbesondere sämtliche wässrigen Farbtonzusammensetzungen einen VOC-Gehalt kleiner 1,0 g/Liter aufweisen, vorzugsweise im Wesentlichen frei von organischen Verbindungen sind, wobei für die Bestimmung des VOC-Gehalts sowie für die Definition von flüchtigen organischen Verbindungen (VOC) Rückgriff zu nehmen ist auf die Richtlinie 2004/42/EG des Europäischen Parlaments und des Rates vom 21. April 2004.

13. Kit-of parts-Abtönsystem nach einem der vorangehenden Ansprüche, **dadurch gekennzeichnet, dass**
die mindestens eine Abtönbasiszusammensetzung B) maximal 0,2 Gew.-% an HALS-Stabilisatoren, bezogen auf das Gesamtgewicht der Abtönbasiszusammensetzung B), aufweist, insbesondere im Wesentlichen frei von HALS-Stabilisatoren ist, und/oder, vorzugsweise und, dass die mindestens eine Abtönbasiszusammensetzung B) maximal 0,5 Gew.-% an UV-Absorbern, bezogen auf das Gesamtgewicht der Abtönbasiszusammensetzung B), aufweist, insbesondere im Wesentlichen frei von UV-Absorbem ist

14. Kit-of parts-Abtönsystem nach einem der vorangehenden Ansprüche, **dadurch gekennzeichnet, dass**
die mindestens eine Abtönbasiszusammensetzung B) maximal 1,0 Gew.-%, bevorzugt maximal 0,1 Gew.-%, bezogen auf das Gesamtgewicht der Abtönbasiszusammensetzung, Titandioxid enthält, vorzugsweise im Wesentlichen frei von Titandioxid ist

15. Verwendung des Kit-of-parts-Abtönsystems nach einem der vorangehenden Ansprüche für die Herstellung abgetönter Beschichtungsmassen wie Anstrichsystemen, insbesondere von Wasserlacken, Anstrichfarben, insbesondere Dispersionsfarben, besonders bevorzugt Dispersionsaußenfarben, Silikatfarben, Silikonharzfarben, Dispersionssilikatfarben, Sol-Silikat-Farben, Hybridbindemittelfarben, insbesondere auf Basis einer wässrigen Organosilikat-Hybrid-Dispersion und/oder Putzen, insbesondere Dispersionsputzen, Silikatputzen, Dispersionssilikatputzen, Silikonharzputzen, Hybridbindemittelputzen, Organosilikat-Hybriddispersionsputzen, Sol-Silikat-Putzen und/oder Kunstharzputzen.

16. Abgetöntes Anstrichsystem oder abgetöntes Putzsystem, erhalten oder erhältlich aus dem Abtönsystem gemäß einem der Ansprüche 1 bis 14 durch Vermischen der Zusammensetzung A) mit einer Abtönbasiszusammensetzung B).

17. Anstrich, erhalten oder erhältlich durch Auftragen des abgetönten Anstrichsystems nach Anspruch 16 auf eine Substratoberfläche.

18. Putz, erhalten oder erhältlich durch Auftragen des abgetönten Puztsystems nach Anspruch 16 auf eine Substratoberfläche.

19. Verfahren zum Abtönen einer wässrigen Farbtonzusammensetzung, umfassend die Schritte
i) Zurverfügungstellung von mindestens einer wässrigen Farbtonzusammensetzung, vorzugsweise von mindestens zwei und besonders bevorzugt von mindestens drei wässrigen Farbtonzusammensetzungen, gemäß einem oder mehreren der Ansprüche 1 bis 14,
ii) Zurverfügungstellung der mindestens einen Abtönbasiszusammensetzung nach einem der Ansprüche 1 bis 14 und
iii) Vermischen der Farbtonzusammensetzung gemäß i) und der Abtönbasiszusammensetzung gemäß ii) unter Erhalt eines abgetönten Anstrichsystems oder eines abgetönten Putzsystems, insbesondere nach Anspruch 16.

## Claims

1. Kit-of parts tinting system for colour adjustment of, in particular aqueous, coating compositions, comprising
A) at least one aqueous colour composition, preferably at least two aqueous colour compositions,
wherein at least one aqueous colour composition, preferably a plurality of aqueous colour compositions,
at least one pigment,
at least one HALS-stabilizer (Hindered Amine Light Stabilizer),
at least one wetting and/or dispersing agent,
at least one humectant, in particular polyalkylene glycols,
at least one UV-absorber and
water
and optionally at least one first additive and/or
optionally at least one filler,
contain or consist thereof, and
B) at least one, in particular precisely one, tinting base composition consisting of or containing at least one binder, at least one liquid medium and optionally at least one second additive,
or comprising
A') at least one aqueous colour composition, preferably at least two aqueous colour compositions,
wherein at least one aqueous colour composition, preferably a plurality of aqueous colour compositions,
at least one pigment,
at least one wetting and/or dispersing agent,
at least one humectant, in particular polyalkylene glycols, and
water
and optionally at least one first additive
contain or consisting thereof,
wherein the colour composition A') is substantially free of HALS-stabilizers and substantially free of UV-absorbers,
B) at least one, in particular precisely one, tinting base composition consisting of or containing at least one binder, at least one liquid medium and optionally at least one second additive, and
C) at least one, in particular pasty, composition containing at least one HALS-stabilizer and at least one UV-absorber.

2. Kit-of parts tinting system according to claim 1, **characterized in that**
the aqueous colour composition A) containing the at least one pigment, the at least one HALS-stabilizer and the wetting and/or dispersing agent, has a pH-value greater than or equal to 9.0, preferably in the range of 10.0 to 12.0 and particularly preferably in the range of 10.5 to 11.5, or is adjusted to a pH-value greater than or equal to 9.0, preferably in the range of 10.0 to 12.0 and particularly preferably in the range of 10.5 to 11.5.

3. Kit-of parts tinting system according to one of the preceding claims, **characterized in that**
the at least one pigment in the aqueous colour composition A), containing this at least one pigment, the at least one HALS-stabilizer and the wetting and/or dispersing agent, is selected from the group consisting of inorganic pigments, in particular comprising
inorganic white pigments and/or inorganic coloured pigments, organic pigments and mixtures thereof,

4. Kit-of parts tinting system according to one of the preceding claims, **characterized in that**
the pigment is selected from inorganic and organic coloured pigments which, when using 1 part by weight, based on the amount of titanium dioxide, lead to a colour composition A) or to a colour composition A') which, in the presence of titanium dioxide in an amount above 1 part by weight, very particularly preferably up to a maximum of 1 part by weight, provide a 1/3 standard colour depth according to DIN 53235-1:2005-06 (testing of pigments - tests on standard colour depth samples - part 1: standard colour depths) and DIN 53235-1:2005-02 (testing of pigments - tests on standard colour depth samples - part 2: adjusting samples to standard colour depth) in a transparent test medium according to the following formulation:
| Components | part by weight (%) |
|---|---|
| water | 9.5 |
| methylhydroxyethylcellulose | 0.2 |
| sodium polyphosphate | 0.1 |
| sodium hydroxide, 20% in water | 0.2 |
| sodium polyacrylate, 35% in water | 0.3 |
| defoamer | 0.3 |
| CaCO₃, D50%: 20.5 µm, D98%: < 50 µm | 20.0 |
| CaCO₃, D50%: 0.8 µm, D98%: < 5 µm | 4.0 |
| CaCO₃, D50%: 13 µm, D98%: < 120 µm | 10.0 |
| CaCO₃, D50%: 26 µm, D98%: < 190 µm | 7.5 |
| aluminium silicate, D50%: 32 µm | 5.0 |
| organic binder: plasticizer-free dispersion based on acrylic and methacrylic esters, 46% in water, T_{G}: 23°C | 36.5 |
| magnesium silicate (talcum), D50%: 4.5 µm | 5.0 |
| butyl diglycol acetate | 1.2 |
| chloromethylisothiazolinone/methylisothiazolinone 3:1, 1.5% in water | 0.1 |
| methylbenzisothiazolinone 1:1, 10% in water | 0.1 |

5. Kit-of parts tinting system according to one of the preceding claims, **characterized in that**
the at least one HALS-stabilizer in the aqueous colour composition A), containing the at least one pigment, this at least one HALS-stabilizer and the wetting and dispersing agent, is selected from the group consisting of N-substituted polyalkylpiperidines, N-substituted polyalkylpiperazinones, benzotriazole derivatives and any mixtures thereof.

6. Kit-of parts tinting system according to claim 5, **characterized in that**
the at least one HALS-stabilizer is selected from the group consisting of 2,2,6,6-tetraalkylpiperidines, in particular 2,2,6,6-tetramethylpiperidines, wherein the secondary nitrogen atom of the piperidine ring is optionally substituted, in particular with alkyl groups or with carbonyl or thiocarbonyl groups, 1,2,2,6,6-pentamethylpiperidine derivatives, in particular 4-(meth)acryloyloxy-2,2,6,6-tetramethylpiperidine, 4-(meth)acryloylamino-2,2,6,6-tetramethylpiperidine, 4-(meth)acryloyloxy-1,2,2,6,6-pentamethylpiperidine or 4-(meth)acryloylamino-1,2,2,6,6-pentamethylpiperidine, bis(2,2,6,6-tetramethyl-4-piperidyl) esters, in particular bis(2,2,6,6-tetramethyl-4-piperidyl) sebacate, bis(1-octyloxy-2,2,6,6-tetramethyl-4-piperidyl) sebacate, 8-acetyl-3-dodecyl-7,7,9,9-tetramethyl-1,3,8-triazaspiro(4,5)-decane-2,5-dione, bis(2,2,6,6-tetramethyl-4-piperidyl) succinate, poly(N-β-hydroxyethyl-2,2,6,6-tetramethyl-4-hydroxypiperidine succinate, bis(N-methyl-2,2,6,6-tetramethyl-4-piperidyl) sebacate, 5,5-trimethylhexanoic acid 2-[2,2,6,6-tetramethyl-4-(3,5,5-trimethylhexanoyloxy)piperidin-1-yl]ethyl ester and any mixtures thereof.

7. Kit-of parts tinting system according to one of the preceding claims, **characterized in that**
the at least one UV-absorber in the aqueous colour composition, containing the at least one pigment, the at least one HALS-stabilizer, the wetting and dispersing agent and the UV-absorber, is selected from the group consisting of triazines, benzotriazoles, benzoxazinones and any mixtures thereof.

8. Kit-of parts tinting system according to claim 7, **characterized in that**
the at least one UV-absorber is selected from the group consisting of 2-(4,6-diphenyl-1,3,5-triazin-2-yl)-5-(hexyl)oxy-phenol, (2-(2'-hydroxyphenyl)-4,6-bis(4-phenylphenyl)-triazine, 2-hydroxyphenyl-s-triazine, (2-(2'-hydroxy-5'-methylphenyl)benzotriazole), bis(2,2,6,6-tetramethyl-1-octyloxypiperidin-4-yl)-1,10-decanedioate, 1,8-bis[(2,2,6,6-tetramethyl-4-((2,2,6,6-tetramethyl-1-octyloxypiperidin-4-yl)-decane-1,10-dioyl)piperidin-1-yl)oxy]octane, C7-C9-alkyl-3-[3-(2H-benzotriazol-2-yl)-5-(1,1-dimethylethyl)-4-hydroxyphenyl]propionates and any mixtures thereof.

9. Kit-of parts tinting system according to one of the preceding claims, **characterized in that**
the HALS stabilizer comprises or represents a bis(2,2,6,6-tetraalkyl-4-piperidyl) ester, in particular bis(2,2,6,6-tetramethyl-4-piperidyl) sebacate, bis(1-octyloxy-2.2.6.6- tetramethyl-4-piperidyl) sebacate, 8-acetyl-3-dodecyl-7,7,9,9-tetramethyl-1,3,8-triazaspiro(4,5)-decane-2,5-dione, bis(2,2,6,6-tetramethyl-4-piperidyl) succinate, poly(N-β-hydroxyethyl-2,2,6,6-tetramethyl-4-hydroxy-piperidine succinate, bis(N-methyl-2,2,6,6-tetramethyl-4-piperidyl) sebacate and/or 5,5-trimethyl-hexanonic acid 2-[2,2,6,6-tetramethyl-4-(3,5,5-trimethyl-hexanoyloxy)-piperidin-1-yl]-ethyl ester, and **in that**
the UV-absorber comprises or represents a C7-C9-alkyl-3-[3-(2H-benzotriazol-2-yl)-5-(1,1-dimethylethyl)-4-hydroxyphenyl]propionate.

10. Kit-of parts tinting system according to one of the preceding claims, **characterized in that**
in the aqueous colour composition A), containing the at least one pigment, the at least one UV-absorber, the at least one HALS-stabilizer and the wetting and dispersing agent, there are contained:
2 to 80 wt.-%, preferably 5 to 75 wt.-% and particularly preferably 10 to 70 wt.-%, of the at least one pigment,
0.5 to 6 wt.-%, preferably 1 to 4 wt.-% and particularly preferably 1.5 to 3 wt.-%, of the at least one UV-absorber,
0.1 to 5 wt.-%, preferably 0.2 to 3 wt.-% and particularly preferably 0.5 to 2.5 wt.-%, of the at least one HALS-stabilizer,
0.2 to 20 wt.-%, preferably 1 to 18 wt.-% and particularly preferably 2 to 15 wt.-%, of the at least one wetting and/or dispersing agent,
0 to 5 wt.-%, preferably 0.01 to 3.5 wt.-% and particularly preferably 0.1 to 2.5 wt.- %, of the at least one first additive,
0 to 70 wt.-%, preferably 0.1 to 65 wt.-% and particularly preferably 1 to 60 wt.-%, of fillers,
0.1 to 20 wt.-%, preferably 0.5 to 10 wt.-% and particularly preferably 1 to 6 wt-%, of at least one humectant,
wherein the proportions of the components forming the colour composition represent solid proportions or, if not present as a solid at 20 °C, the non-aqueous active substance proportions and wherein the amount of components forming the composition, including water, is always selected such that the total is 100.0 wt.-%.

11. Kit-of parts tinting system according to one of the preceding claims, **characterized in that**
the tinting base composition B) is substantially free of titanium dioxide and preferably represents a transparent tinting base composition.

12. Kit-of parts tinting system according to one of the preceding claims, **characterized in that**
at least one aqueous colour composition is substantially free of in-can perservatives, preferably free of in-can and film perservatives, and particularly preferably free of perservatives, and/or, in particular and, that
at least one, in particular all aqueous colour compositions have a VOC-content of less than 1.0 g/liter, preferably are substantially free of organic compounds, wherein for the determination of the VOC-content as well as for the definition of volatile organic compounds (VOC) reference is to be made to the Directive 2004/421EC of the European Parliament and of the Council of April 21, 2004.

13. Kit-of parts tinting system according to one of the preceding claims, **characterized in that**
the at least one tinting base composition B) has at most 0.2 wt.-% of HALS-stabilizers, based on the total weight of the tinting base composition B), in particular is substantially free of HALS-stabilizers, and/or, preferably and, that the at least one tinting base composition B) has at most 0.5 wt.-% of UV-absorbers, based on the total weight of the tinting base composition B), in particular is substantially free of UV-absorbers.

14. Kit-of parts tinting system according to one of the preceding claims, **characterized in that**
the at least one tinting base composition B) contains at most 1.0 wt.-%, preferably at most 0.1 wt.-%, based on the total weight of the tinting base composition, of titanium dioxide, preferably is substantially free of titanium dioxide.

15. Use of the kit-of parts tinting system according to one of the preceding claims for the production of tinted coating compositions such as paint systems, in particular of water varnishes, coating paints, in particular dispersion paints, particularly preferably exterior dispersion paints, silicate paints, silicone resin paints, dispersion silicate paints, sol-silicate paints, hybrid binder paints, in particular based on an aqueous organosilicate hybrid dispersion and/or plasters, in particular dispersion plasters, silicate plasters, dispersion silicate plasters, silicone resin plasters, hybrid binder plasters, organosilicate hybrid dispersion plasters, sol-silicate plasters and/or synthetic resin plasters.

16. Tinted paint system or tinted plastering system, obtained or obtainable from the tinting system according to one of claims 1 to 14 by mixing the composition A) with a tinting base composition B).

17. Paint, obtained or obtainable by applying the tinted paint system according to claim 16 to a substrate surface.

18. Plaster, obtained or obtainable by applying the tinted plastering system according to claim 16 to a substrate surface.

19. Process for tinting an aqueous colour composition, comprising the steps of
i) providing at least one aqueous colour composition, preferably at least two and particularly preferably at least three aqueous colour compositions, according to one or more of claims 1 to 14,
ii) providing the at least one tinting base composition according to one of claims 1 to 14 and
iii) mixing the colour composition according to i) and the tinting base composition according to ii) to obtain a tinted paint system or a tinted plastering system, in particular according to claim 16.

## Revendications

1. Système de teinture en kit de pièces pour l'ajustement de couleur de masses de revêtement, en particulier aqueuses, comprenant
A) au moins une composition aqueuse de la teinte, de préférence au moins deux compositions aqueuses de la teinte,
dans lequel au moins une composition aqueuse de la teinte, de préférence une pluralité de compositions aqueuses de la teinte,
au moins un pigment,
au moins un stabilisateur HALS (stabilisateur de lumière d'amine encombrée),
au moins un agent mouillant et/ou dispersant,
au moins un humectant, en particulier des polyalkylèneglycols,
au moins un absorbeur d'UV et
eau
ainsi que le cas échéant au moins un premier additif et/ou
le cas échéant au moins une charge,
contiennent ou sont constitués de ceux-ci, et
B) au moins une, en particulier exactement une, composition de base à teinter, constituée de ou contenant au moins un liant, au moins un milieu liquide et le cas échéant au moins un deuxième additif,
ou comprenant
A') au moins une composition aqueuse de la teinte, de préférence au moins deux compositions aqueuses de la teinte,
dans lequel au moins une composition aqueuse de la teinte, de préférence une pluralité de compositions aqueuses de la teinte,
au moins un pigment,
au moins un agent mouillant et/ou dispersant,
au moins un humectant, en particulier des polyalkylèneglycols, et
eau
ainsi que le cas échéant au moins un premier additif,
contiennent ou sont constitués de ceux-ci,
dans lequel la composition de la teinte A') est essentiellement exempte de stabilisateurs HALS et essentiellement exempte d'absorbeurs d'UV,
B) au moins une, en particulier exactement une, composition de base à teinter, constituée de ou contenant au moins un liant, au moins un milieu liquide et le cas échéant au moins un deuxième additif, et
C) au moins unecomposition, en particulier pâteuse, contenant au moins un stabilisateur HALS et au moins un absorbeur d'UV.

2. Système de teinture en kit de pièces selon la revendication 1, **caractérisé en ce que** la composition aqueuse de la teinte A) contenant l'au moins un pigment, l'au moins un stabilisateur HALS et l'agent mouillant et/ou dispersant, présente un pH supérieur ou égal à 9,0, de préférence dans la plage de 10,0 à 12,0 et de manière particulièrement préférée dans la plage de 10,5 à 11,5, ou est ajustée à un pH supérieur ou égal à 9,0, de préférence dans la plage de 10,0 à 12,0 et de manière particulièrement préférée dans la plage de 10,5 à 11,5.

3. Système de teinture en kit de pièces selon l'une quelconque des revendications précédentes, **caractérisé en ce que**
l'au moins un pigment dans la composition aqueuse de la teinte A), contenant cet au moins un pigment, l'au moins un stabilisateur HALS et l'agent mouillant et/ou dispersant, est choisi dans le groupe constitué par les pigments inorganiques, comprenant en particulier
les pigments blancs inorganiques et/ou les pigments de couleur inorganiques, les pigments organiques et les mélanges de ceux-ci,

4. Système de teinture en kit de pièces selon l'une quelconque des revendications précédentes, **caractérisé en ce que**
le pigment est choisi parmi les pigments de couleur inorganiques et organiques, qui lors de l'utilisation de 1 partie en poids, par rapport à la quantité de dioxyde de titane, conduisent à une composition de la teinte A) ou à une composition de la teinte A'), qui en présence de dioxyde de titane en une quantité supérieure à 1 partie en poids, de manière tout particulièrement préférée jusqu'à un maximum de 1 partie en poids, fournissent une profondeur de couleur standard de 1/3 selon la norme DIN 53235-1:2005-06 (essai de pigments - essais sur des échantillons de profondeur de couleur standard - partie 1 : profondeurs de couleur standard) et la norme DIN 53235-1:2005-02 (essai de pigments - essais sur des échantillons de profondeur de couleur standard - partie 2 : réglage d'échantillons à la profondeur de couleur standard) dans un milieu d'essai transparent selon la formulation suivante :
| composants | partie en poids (%) |
|---|---|
| eau | 9,5 |
| méthylhydroxyéthylcellulose | 0,2 |
| polyphosphate de sodium | 0,1 |
| hydroxyde de sodium, 20 % dans l'eau | 0,2 |
| polyacrylate de sodium, 35 % dans l'eau | 0,3 |
| antimousse | 0,3 |
| CaCO₃, D50 % : 20,5 µm, D98 % : < 50 µm | 20,0 |
| CaCO₃, D50 % : 0,8 µm, D98 % : < 5 µm | 4,0 |
| CaCO₃, D50 % : 13 µm, D98 % : < 120 µm | 10,0 |
| CaCO₃, D50 % : 26 µm, D98 % : < 190 µm | 7,5 |
| silicate d'aluminium, D50 % : 32 µm | 5,0 |
| liant organique : dispersion sans plastifiant à base d'esters d'acide acrylique et méthacrylique, 46 % dans l'eau, T_{G}: 23 °C | 36,5 |
| silicate de magnésium (talc), D50 % : 4,5 µm | 5,0 |
| acétate de butyldiglycol | 1,2 |
| chlorométhylisothiazolinone/méthylisothiazolinone 3:1, 1,5 % dans l'eau | 0,1 |
| méthyl-/benzisothiazolinone 1:1, 10 % dans l'eau | 0,1 |

5. Système de teinture en kit de pièces selon l'une quelconque des revendications précédentes, **caractérisé en ce que**
l'au moins un stabilisateur HALS dans la composition aqueuse de la teinte A), contenant l'au moins un pigment, cet au moins un stabilisateur HALS et l'agent mouillant et dispersant, est choisi dans le groupe constitué par les polyalkylpipéridines N-substituées, les polyalkylpipérazinones N-substituées, les dérivés de benzotriazole et les mélanges quelconques de ceux-ci.

6. Système de teinture en kit de pièces selon la revendication 5, **caractérisé en ce que** l'au moins un stabilisateur HALS est choisi dans le groupe constitué par les 2,2,6,6-tétraalkylpipéridines, en particulier les 2,2,6,6-tétraméthylpipéridines, dans lequel l'atome d'azote secondaire du cycle pipéridine est le cas échéant substitué, en particulier par des groupes alkyle ou par des groupes carbonyle ou thiocarbonyle, les dérivés de 1,2,2,6,6-pentaméthylpipéridine, en particulier la 4-(méth)acryloyloxy-2,2,6,6-tétraméthylpipéridine, la 4-(méth)acryloylamino-2,2,6,6-tétraméthylpipéridine, la 4-(méth)acryloyloxy-1,2,2,6,6-pentaméthylpipéridine ou la 4-(méth)acryloyl-amino-1,2,2,6,6-pentaméthylpipéridine, les esters de bis(2,2,6,6-tétraméthyl-4-pipéridyle), en particulier le sébacate de bis(2,2,6,6-tétraméthyl-4-pipéridyle), le sébacate de bis(1-octyloxy-2,2,6,6-tétraméthyl-4-pipéridyle), la 8-acétyl-3-dodécyl-7,7,9,9-tétraméthyl-1,3,8-triazaspiro(4,5)-décane-2,5-dione, le succinate de bis(2,2,6,6-tétraméthyl-4-pipéridyle), le succinate de poly(N-β-hydroxyéthyl-2,2,6,6-tétraméthyl-4-hydroxy-pipéridine, le sébacate de bis(N-méthyl-2,2,6,6-tétraméthyl-4-pipéridyle), l'ester 2-[2,2,6,6-tétraméthyl-4-(3,5,5-triméthyl-hexanoyloxy)-pipéridin-1-yl]-éthylique de l'acide 5,5-triméthylhexanoïque et les mélanges quelconques de ceux-ci.

7. Système de teinture en kit de pièces selon l'une quelconque des revendications précédentes, **caractérisé en ce que**
l'au moins un absorbeur d'UV dans la composition aqueuse de la teinte, contenant l'au moins un pigment, l'au moins un stabilisateur HALS, l'agent mouillant et dispersant et l'absorbeur d'UV, est choisi dans le groupe constitué par les triazines, les benzotriazoles, les benzoxazinones et les mélanges quelconques de ceux-ci.

8. Système de teinture en kit de pièces selon la revendication 7, **caractérisé en ce que** l'au moins un absorbeur d'UV est choisi dans le groupe constitué par le 2-(4,6-diphényl-1,3,5-triazin-2-yl)-5-(hexyl)oxyphénol, la (2-(2'-hydroxyphényl)-4,6-bis(4-phénylphényl)triazine, la 2-hydroxyphényl-s-triazine, le (2-(2'-hydroxy-5'-méthylphényl)benzotriazole), le bis(2,2,6,6-tétraméthyl-1-octyloxypipéridin-4-yl)-1,10-décanedioate, le 1,8-bis[(2,2,6,6-tétraméthyl-4-((2,2,6,6-tétraméthyl-1-octyloxypipéridin-4-yl)décane-1,10-dioyl)pipéridin-1-yl)oxy]octane, les 3-[3-(2H-benzotriazol-2-yl)-5-(1,1-diméthyléthyl)-4-hydroxyphényl]propionates d'alkyle en C7-C9 et les mélanges quelconques de ceux-ci.

9. Système de teinture en kit de pièces selon l'une quelconque des revendications précédentes, **caractérisé en ce que**
le stabilisateur HALS comprend ou représente un ester de bis(2,2,6,6-tétraalkyl-4-pipéridyle), en particulier le sébacate de bis(2,2,6,6-tétraméthyl-4-pipéridyle), le sébacate de bis(1-octyloxy-2,2,6,6-tétraméthyl-4-pipéridyle), la 8-acétyl-3-dodécyl-7,7,9,9-tétraméthyl-1,3,8-triazaspiro(4,5)décane-2,5-dione, le succinate de bis(2,2,6,6-tétraméthyl-4-pipéridyle), le succinate de poly(N-p-hydroxyéthyl-2,2,6,6-tétraméthyl-4-hydroxypipéridine, le sébacate de bis(N-méthyl-2,2,6,6-tétraméthyl-4-pipéridyle) et/ou l'ester 2-[2,2,6,6-tétraméthyl-4-(3,5,5-triméthylhexanoyloxy)pipéridin-1-yl]éthylique d'acide 5,5-triméthylhexanoïque, et **en ce que**
l'absorbeur d'UV comprend ou représente un 3-[3-(2H-benzotriazol-2-yl)-5-(1,1-diméthyléthyl)-4-hydroxyphényl]propionate d'alkyle en C7-C9.

10. Système de teinture en kit de pièces selon l'une quelconque des revendications précédentes, **caractérisé en ce que**
dans la composition aqueuse de la teinte A), contenant l'au moins un pigment, l'au moins un absorbeur d'UV, l'au moins un stabilisateur HALS et l'agent mouillant et dispersant, sont contenus :
2 à 80 % en poids, de préférence 5 à 75 % en poids et de manière particulièrement préférée 10 à 70 % en poids de l'au moins un pigment,
0,5 à 6 % en poids, de préférence 1 à 4 % en poids et de manière particulièrement préférée 1,5 à 3 % en poids de l'au moins un absorbeur d'UV,
0,1 à 5 % en poids, de préférence 0,2 à 3 % en poids et de manière particulièrement préférée 0,5 à 2,5 % en poids de l'au moins un stabilisateur HALS, 0,2 à 20 % en poids, de préférence 1 à 18 % en poids et de manière particulièrement préférée 2 à 15 % en poids de l'au moins un agent mouillant et/ou dispersant,
0 à 5 % en poids, de préférence 0,01 à 3,5 % en poids et de manière particulièrement préférée 0,1 à 2,5 % en poids de l'au moins un premier additif, 0 à 70 % en poids, de préférence 0,1 à 65 % en poids et de manière particulièrement préférée 1 à 60 % en poids de charges,
0,1 à 20 % en poids, de préférence 0,5 à 10 % en poids et de manière particulièrement préférée 1 à 6 % en poids d'au moins un humectant,
dans lequel les proportions des composants formant la composition de la teinte représentent des proportions de matières solides ou, dans la mesure où elles ne sont pas présentes sous forme de matières solides à 20°C, les proportions de substances actives non aqueuses et dans lequel la quantité de composants formant la composition, y compris l'eau, est toujours choisie de telle sorte qu'il en résulte au total 100,0 % en poids.

11. Système de teinture en kit de pièces selon l'une quelconque des revendications précédentes, **caractérisé en ce que**
la composition de base à teinter B) est essentiellement exempte de dioxyde de titane et représente de préférence une composition de base à teinter transparente.

12. Système de teinture en kit de pièces selon l'une quelconque des revendications précédentes, **caractérisé en ce que**
au moins une composition aqueuse de la teinte est essentiellement exempte de conservateurs en pot, de préférence exempte de conservateurs en pot et de film, et de manière particulièrement préférée exempte de conservateurs, et/ou, en particulier et **en ce que**
au moins une, en particulier toutes les compositions aqueuses de la teinte présentent une teneur en COV inférieure à 1,0 g/litre, de préférence sont essentiellement exemptes de composés organiques, dans lequel, pour la détermination de la teneur en VOC ainsi que pour la définition de composés organiques volatils (COV), il faut se référer à la directive 2004/421CE du Parlement européen et du Conseil du 21 avril 2004.

13. Système de teinture en kit de pièces selon l'une quelconque des revendications précédentes, **caractérisé en ce que**
l'au moins une composition de base à teinter B) présente au maximum 0,2 % en poids de stabilisateurs HALS, par rapport au poids total de la composition de base à teinter B), en particulier est essentiellement exempte de stabilisateurs HALS, et/ou, de préférence et **en ce que** l'au moins une composition de base à teinter B) présente au maximum 0,5 % en poids d'absorbeurs d'UV, par rapport au poids total de la composition de base à teinter B), en particulier est essentiellement exempte d'absorbeurs d'UV.

14. Système de teinture en kit de pièces selon l'une quelconque des revendications précédentes, **caractérisé en ce que**
l'au moins une composition de base à teinter B) contient au maximum 1,0 % en poids, de préférence au maximum 0,1 % en poids, par rapport au poids total de la composition de base à teinter, de dioxyde de titane, de préférence est essentiellement exempte de dioxyde de titane.

15. Utilisation du système de teinture en kit de pièces selon l'une quelconque des revendications précédentes pour la fabrication de masses de revêtement teintées telles que des systèmes de peinture, en particulier de laques aqueuses, des revêtements de peinture, en particulier des peintures en dispersion, de manière particulièrement préférée des peintures extérieur en dispersion, des peintures au silicate, des peintures à la résine de silicone, des peintures au silicate en dispersion, des peintures au sol-silicate, des peintures à liant hybride, en particulier à base d'une dispersion hybride aqueuse d'organosilicate et/ou des plâtres, en particulier des plâtres en dispersion, des plâtres au silicate, des plâtres au silicate en dispersion, des plâtres à la résine de silicone, des plâtres à liant hybride, des plâtres en dispersion hybride d'organosilicate, des plâtres au sol-silicate et/ou des plâtres à résine synthétique.

16. Système de revêtement teinté ou système de plâtre teinté, obtenu ou pouvant être obtenu à partir du système de teinture selon l'une quelconque des revendications 1 à 14 par mélange de la composition A) avec une composition de base à teinter B).

17. Revêtement, obtenue ou pouvant être obtenue par application du système de revêtement teinté selon la revendication 16 sur une surface de substrat

18. Plâtre, obtenue ou pouvant être obtenue par application du système de plâtre teinté selon la revendication 16 sur une surface de substrat.

19. Procédé de teinture d'une composition aqueuse de la teinte, comprenant les étapes de
i) mise à disposition d'au moins une composition aqueuse de la teinte, de préférence d'au moins deux et de manière particulièrement préférée d'au moins trois compositions aqueuses de la teinte, selon une ou plusieurs des revendications 1 à 14,
ii) mise à disposition de l'au moins une composition de base à teinter selon l'une quelconque des revendications 1 à 14 et
iii) mélange de la composition de la teinte selon i) et de la composition de base à teinter selon ii) avec obtention d'un système de revêtement teinté ou d'un système de plâtre teinté, en particulier selon la revendication 16.
